# EUROPÄISCHE PATENTANMELDUNG

(11) **EP 1 233 027 A1**
(43) Veröffentlichungstag der Anmeldung: **21.08.2002**
(21) Anmeldenummer: 02003062.3
(22) Anmeldetag: 12.02.2002
(51) Int. Cl.: C08B 30/04, C08B 30/14

(54) **Verfahren zur Herstellung eines zu Stärke funktionsähnlichen Produktes und nach dem Verfahren herstellbares modifiziertes Quellmehl**

(30) Priorität: 13.02.2001 DE 10107082
(71) Anmelder: EXTRUSTAR GMBH, 38165 LEHRE-FLECHTORF (DE)
(72) Erfinder: Thönebe, Matthias, 38165 Lehre-Flechtorf (DE); Witt, Sigurd, 48527 Nordhorn (DE)
(74) Vertreter: Lins, Edgar, Dipl.-Phys. Dr.jur.

(57) **Zusammenfassung**

Die Herstellung eines zu Stärke funktionsähnlichen Produktes, das insbesondere in der Papierindustrie anstelle der herkömmlichen Stärke verwendbar ist, lässt sich mit folgenden Verfahrensschritten herstellen:
- Zugabe eines wässrigen Mediums zu einem Mehl mit einen Proteingehalt ≤ 9 % zur Einstellung einer Feuchte von ca. 20 bis 21 %,
- Ausübung von starken Scherkräften mittels eines Extruders bei einer Temperatur zwischen 165°C und 190°C und
- Extrudieren der Masse durch eine Extrusionsdüse,
wobei die Ausübung der Scherkräfte mittels des Extruders derart erfolgt, dass eine Mehlsuspension bei 8 % Mehlanteil eine Viskosität zwischen 55 und 65 mPas oder zwischen 30 und 40 mPas mit einer Streubreite mehrerer Proben von ≤ ± 5 mPas aufweist.

## Beschreibung

Die Erfindung betrifft ein Verfahren zur Herstellung eines zu Stärke funktionsähnlichen Produkts, insbesondere zur Verwendung in der Papierindustrie.

Die Erfindung betrifft ferner ein nach dem Verfahren herstellbares modifiziertes Quellmehl, insbesondere Roggenquellmehl.

Zur Gewinnung von Stärke aus pflanzlichen Rohstoffen wird Mehl, vorzugsweise von Mais, Kartoffeln, Weizen, Reis und Maniok behandelt, wobei die Stärkekörner nach Abtrennung des Klebers mechanisch auf nassem Wege aus dem Zellverband herausgelöst werden. Die so hergestellte native Stärke wird als Lebensmittel verwendet, aber auch im erheblichen Umfange im Non-Food-Bereich eingesetzt. Die gereinigte, fabrikmäßig gewonnene Stärke dient zur Herstellung von Kleister und Klebstoffen, als Papierhilfsmittel, z. B. zum Leimen des Papiers, zur Herstellung von Kartonagen, als Verdickungsmittel für Druckfarben, als Stärkungsmittel für Textilien usw.

Für die Herstellung der Stärke besteht ein erheblicher Energiebedarf, insbesondere für die Verfahrensstufen Separierung, Entwässerung und Trocknung. Die nicht unerhebliche Wassermenge, die zum Auswaschen erforderlich ist, muss nach aufwändigen Aufarbeitungsstufen in einen Kreislauf zurückgeführt werden. Die hergestellte native Stärke muss beispielsweise zur Anwendung in der Papierfabrik chemisch oder enzymatisch aufgeschlossen werden, um sie beispielsweise für die Oberflächenleimung einzusetzen. Auch hierfür ist ein hoher apparativer Aufwand und hoher Energiebedarf zu verzeichnen. Der Bedarf an Stärke im Bereich der Papierindustrie steigt, führt jedoch zu dem Problem, dass die bei der Stärkeherstellung anfallenden Nebenprodukte, (z. B. Weizengluten) nicht in dem steigenden Maß vermarktet werden kann, woraus zusätzliche Probleme entstehen. Roggen ist als Ausgangsmaterial für die Stärkeherstellung wegen eines aufwändigen Aufschlussverfahrens nicht von Bedeutung.

Durch DD 276 313 A1 ist ein Vorschlag bekannt, Getreidemehl thermisch und/oder alkalisch zu verkleistern und anschließend dem Papier im Turbolöser, in der Mischbütte oder kontinuierlich vor der Mischpumpe zuzugeben. Die in dieser Schrift angegebenen vergleichbaren Eigenschaften des Papiers, wie sie mit bekannten Stärkesorten erzielt werden, konnten nicht in der Praxis bestätigt werden.

In "Mühle + Mischfutter" 2000, Seiten 841 bis 846 sind Anbaubedingungen beschrieben, um geeigneten Roggen und Triticale für die trockenchemische Modifizierung und den Einsatz des katiönischen Mehls in der Papierindustrie zu erhalten. Angestrebt werden dabei Mehle mit einem möglichst hohen Stärkeanteil bei niedrigem Rohproteingehalt. Die Art der trockenchemischen Modifizierung ist dabei nicht erläutert.

Bekannt ist ferner, in herkömmlicherweise hergestellte Stärke, insbesondere Kartoffelstärke, durch Kochextrusion in einem gleichlaufenden Doppelschneckenextruder zu modifizieren, um Carboxymethylstärke oder kationische Stärke herzustellen (z. B. Norbert Gimmler, Dissertation TU Berlin 1992 "Optimierung der Prozessbedingungen zur Herstellung von Stärkederivaten in einem gleichlaufenden Zweiwellenextruder als Reaktor").

Die vorliegende Erfindung geht von der Problemstellung aus, die durch den Einsatz von Stärke erzielbaren Ergebnisse mit einem geringeren apparativen und energetischen Aufwand zu erzielen.

Zur Lösung dieses Problems weist das eingangs erwähnte Verfahren erfindungsgemäß folgende Verfahrensschritte auf:
- Zugabe eines wässrigen Mediums zu einem Mehl mit einen Proteingehalt ≤ 9 % zur Einstellung einer Feuchte von ca. 16 bis 25 %,
- Ausübung von starken Scherkräften mittels eines Extruders bei einer Temperatur zwischen 165°C und 190°C und
- Extrudieren der Masse durch eine Extrusionsdüse, wobei die Ausübung der Scherkräfte mittels des Extruders derart erfolgt, dass eine Mehlsuspension bei 8 % Mehlanteil eine Viskosität zwischen 55 und 65 mPas mit einer Streubreite mehrerer Proben von ≤ ± 5 mPas aufweist.

Das erfindungsgemäße Verfahren vermeidet die in der Praxis bisher erforderliche Herstellung der Stärke und deren anschließende Modifizierung durch eine direkte Verwendung eines in üblicherweise gemahlenen Mehls, das einen Proteingehalt ≤ 9 %, vorzugsweise ≤ 8 % aufweist. Die Erfindung beruht auf der Erkenntnis, dass die für die Stärkeanwendung an sich störenden Proteine bei der anschließenden Ausübung der starken Scherkräfte bei der Temperatur zwischen 165°C und 190°C in erheblichem Maß zersetzt werden, so dass der störende Einfluss der Proteine unterdrückt wird. Die extrudierte Masse wird zweckmäßigerweise auf einem Band getrocknet und steht dann in pulvriger, rieselfähiger Form zur Verfügung. Das Produkt kann in kaltem oder warmen Wasser gelöst werden. Komponenten des Mehls, die durch die Modifizierung nicht in eine lösliche Form überführt werden können, wie beispielsweise Schalenbestandteile, sind in der Lösung in feiner Verteilung dispergiert. Die durch den Extruder ausgeübten Scherkräfte werden erfindungsgemäß so eingestellt, dass eine bestimmte Moleküllänge für das Quellmehl eingestellt wird und diese Moleküllänge mit einer geringen Streubreite erzeugt wird. Für den erfindungsgemäßen Zweck der Herstellung eines Quellmehls, insbesondere Roggenquellmehls, als Substitutionsprodukt für Stärke in der Papierindustrie werden erfindungsgemäß Moleküllängen eingestellt, die sich in einer Viskosität der Roggenmehlsuspension bei 8 % Mehlanteil von 55 bis 65 mPas oder von 30 bis 40 mPas niederschlagen, wobei die Streubreite der Viskosität in der Suspension ≤ ± 5 mPas beträgt.

Das erfindungsgemäße modifizierte Quellmehl wird üblicherweise mit einem 8prozentigen Mehlanteil hergestellt und als Suspension ausgeliefert. In der Papierindustrie, insbesondere für die Herstellung von Wellpappen, Rohpapieren und Karton auf der Basis von Altpapier, wird das Quellmehl bis auf 4 bis 5 % Mehlanteil verdünnt und weist dann eine Viskosität zwischen 40 und 55 mPas auf, mit der sie sich für diese Zwecke gut verarbeiten lässt.

In gleicher Weise kann eine Oberflächenbearbeitung in der Leimflotte vorgenommen werden, da die Lösung gut in die Papieroberfläche eindringt und zu einer maßgeblichen Erhöhung der Festigkeit des Papiers beiträgt. Hierfür ist die Verwendung eines Quellmehls bevorzugt, das bei einer 8prozentigen Suspension eine Viskosität zwischen 30 und 40 mPas aufweist, wobei wiederum die Streubreite ≤ ± 5 mPas beträgt.

Für die Verarbeitung des erfindungsgemäßen modifizierten Quellmehls ist im Gegensatz zur nativen Mais-, Weizen- und Kartoffelstärke kein chemischer oder enzymatischer Aufschluss erforderlich.

Das trockene erfindungsgemäße Quellmehl weist ein Schüttgewicht von etwa 350 bis 500 g/l auf, ist beigefarben und schwach anionisch. In wässriger Lösung entsteht ein neutraler pH-Wert.

Das erfindungsgemäße Verfahren beruht auf der gleichzeitigen Ausübung der starken Scherkräfte und der Anwendung der Temperatur zwischen 165°C und 190°C auf ein durch Wasserzugabe auf eine definierte Feuchte von ca. 16 bis 25 %, vorzugsweise etwa 20 bis 21 %; eingestelltes Mehl, insbesondere Roggenmehl. Insoweit ist das Verfahren vergleichbar mit der Kochextrusion, die auf in üblicherweise hergestellte Stärke angewendet worden ist, allerdings sind die erfindungsgemäß aufzubringenden Scherkräfte ― auch wegen der geringen Feuchte ― um wenigstens eine Größenordnung höher als die bei der üblichen Kochextrusion aufgewendeten Kräfte.

Das erfindungsgemäße Verfahren lässt sich in einer besonders bevorzugten Ausführungsform mit Roggenmehl durchführen, das einen Ausmahlungsgrad zwischen 50 % und 88 % und einen Ascheanteil in der Trockenmasse zwischen 0,6 % und 1,0 % aufweist. Bevorzugte Werte für den Ausmahlungsgrad liegen bei 75 % bis 82 % und für den Ascheanteil zwischen 0,8 % und 0,9 %.

Für das erfindungsgemäße Verfahren kann es vorteilhaft sein, mit dem wässrigen Medium ein Oxidationsmittel, vorzugsweise Zitronensäure, zuzugeben.

Besonders zweckmäßig ist die Verwendung eines Doppelwellenextruders, wobei vorzugsweise Scherkräfte durch Förderschneckenabschnitte erzeugt werden, die überwiegend vorfördern, aber auch zwischengeschaltete Rückförderabschnitte aufweisen. Zusätzlich können die Wellen Knetabschnitte aufweisen.

Bei der Verwendung des erfindungsgemäß hergestellten modifizierten Quellmehls mit einem Schüttgewicht zwischen 350 und 500 g/l , das als 4 bis 8prozentige Lösung bei 50°C mit einem Mischer mit 100 UpM zu einer Lösung in Wasser mit einer Viskosität von 30 bis 90 mPas herstellt worden ist, für die Papierherstellung sind Festigkeitswerte erzielt worden, die sogar über denen der bevorzugt für diesen Zweck verwendeten Kartoffelstärke liegen. Der C.M.T.-Wert, also der Flachstauchwiderstand liegt durchschnittlich über 200 N, entspricht also dem in der DIN 53 143 Sollwert, der über 190 N liegen soll.

Auch der S.C.T.-Wert, also der Widerstand gegen senkrechte Belastung lag zwischen 1,71 und 2,61 kN/m und übertrifft den Sollbereich von 1,70 bis 2,50 kN/m.

Der Primärenergiebedarf für die Herstellung nativer, getrockneter Kartoffelstärke liegt bei 5860 MJ pro t Stärke. Zusätzlich entsteht das Problem der Wasserreinigung und Rückführung. Der Energieaufwand für die Herstellung des erfindungsgemäßen modifizierten Quellmehls beträgt etwa 1/3 und vermindert drastisch das Problem des Wasserbedarfs und der Wasserreinigung.

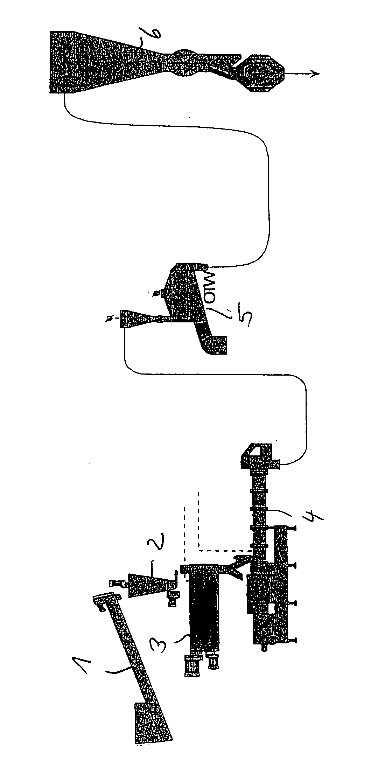

Die Herstellung des erfindungsgemäßen modifizierten Quellmehls erfolgte in einer in der Zeichnung schematisch angedeuteten Anlage.

Aus einem (nicht dargestellten) Mehlvorratsbehälter wurde Roggenmehl des Typs 815 (Ausmahlungsgrad zwischen 75 und 80 %, Ascheanteil in der Trockenmasse 0,79 bis 0,85 % und Stärkegehalt zwischen 71 und 74 %) über eine Förderschnecke 1 einer Dosierungsvorrichtung 2 zugeführt. In einem Vorkonditionierer 3 (Typ BCTC22 der Bühler AG, Schweiz) wird dem mit einem Durchsatz von ca. 360 kg/h zugeführten Mehl eine Flüssigkeit in einer Menge von 34 kg/h eingemischt. Das so mit einer relativ kurzen Verweilzeit vorkonditionierte Produkt gelangt in einen Doppelwellenextruder 4, in den eine zweite Flüssigkeitszugabe von 44 kg/h erfolgt. Der Doppelwellenextruder kann ein Typ der Baureihe BCTG20D der Bühler AG, Schweiz, sein, dessen Extruderwellen ein Drehmoment von ca. 1500 Nm bei einer Drehzahl von etwa 390 UpM erzeugen. Die Produkttemperatur an der Endplatte betrug ca. 170°C. Der Extruder hat eine Leistungsaufnahme von ca. 60 kW. Das über eine zentrische Extruderdüse mit 12 Bohrungen des Durchmessers 6 mm wurde das Produkte extrudiert und in einen Kühler 5 geleitet. Das so gekühlte Produkt gelangt im rieselfähigen Zustand in einen Vorratsbehälter 6, aus dem es dosiert abgegeben werden kann. Das Schüttgewicht der hergestellten Proben liegt zwischen 270 und 320 g/l. Der pH-Wert liegt zwischen 5 und 6, also im für praktische Zwecke neutralen Bereich. Die beigemischte Flüssigkeit enthielt Zitronensäure, wozu 1 kg kristalline Zitronensäure in 20 I kaltes Leitungswasser eingerührt wurde, um das wässrige Zugabemittel zu erzeugen.

## Patentansprüche

1. Verfahren zur Herstellung eines zu Stärke funktionsähnlichen Produkts, insbesondere zur Verwendung in der Papierindustrie, mit folgenden Verfahrensschritten:
- Zugabe eines wässrigen Mediums zu einem Mehl mit einen Proteingehalt ≤ 9 % zur Einstellung einer Feuchte von ca. 16 bis 25 %,
- Ausübung von starken Scherkräften mittels eines Extruders bei einer Temperatur zwischen 165°C und 190°C und
- Extrudieren der Masse durch eine Extrusionsdüse,
wobei die Ausübung der Scherkräfte mittels des Extruders derart erfolgt, dass eine Mehlsuspension bei 8 % Mehlanteil eine Viskosität zwischen 55 und 65 mPas mit einer Streubreite mehrerer Proben von ≤ ± 5 mPas aufweist.

2. Verfahren zur Herstellung eines zu Stärke funktionsähnlichen Produkts, insbesondere zur Verwendung in der Papierindustrie, mit folgenden Verfahrensschritten:
- Zugabe eines wässrigen Mediums zu einem Mehl mit einen Proteingehalt ≤ 9 % zur Einstellung einer Feuchte von ca. 16 bis 25 %,
- Ausübung von starken Scherkräften mittels eines Extruders bei einer Temperatur zwischen 165°C und 190°C und
- Extrudieren der Masse durch eine Extrusionsdüse,
wobei die Ausübung der Scherkräfte mittels des Extruders derart erfolgt, dass eine Mehlsuspension bei 8 % Mehlanteil eine Viskosität zwischen 30 und 40 mPas mit einer Streubreite mehrerer Proben von ≤ ± 5 mPas aufweist.

3. Verfahren nach Anspruch 1 oder 2, bei dem das verwendete Mehl Roggenmehl mit einem Ausmahlungsgrad zwischen 50 % und 88 % und einem Ascheanteil in der Trockenmasse zwischen 0,6 % und 1,0 % ist.

4. Verfahren nach Anspruch 3, bei dem das verwendete Roggenmehl einen Ausmahlungsgrad zwischen 75 % und 82 % aufweist.

5. Verfahren nach Anspruch 3 oder 4 bei dem das Roggenmehl einen Ascheanteil zwischen 0,8 und 0,9 % aufweist.

6. Verfahren nach einem der Ansprüche 1 bis 5, bei dem Mehl mit einem Proteingehalt ≤ 8 % verwendet wird.

7. Verfahren nach einem der Ansprüche 1 bis 6, bei dem durch die Zugabe des wässrigen Mediums eine Feuchte von ca. 20 bis 21 % eingestellt wird.

8. Verfahren nach einem der Ansprüche 1 bis 7, mit einer Zugabe eines Oxidationsmittels zu dem wässrigen Medium.

9. Verfahren nach Anspruch 6, bei dem als Oxidationsmittel Zitronensäure zugegeben wird.

10. Verfahren nach einem der Ansprüche 1 bis 9, bei dem die starken Scherkräfte durch einen Doppelwellenextruder ausgeübt werden.

11. Verfahren nach Anspruch 10, bei dem die Scherkräfte durch Schneckenabschnitte zur Vorförderung und zwischengeschaltete Schneckenabschnitte zur Rückförderung erzeugt werden.

12. Verfahren nach Anspruch 11, bei dem der Doppelwellenextruder zusätzliche Knetabschnitte aufweist.

13. Verfahren nach einem der Ansprüche 1 bis 12, bei dem die extrudierte Masse zu einem rieselfähigen Produkt getrocknet wird.

14. Modifiziertes Quellmehl, insbesondere Roggenquellmehl, herstellbar nach dem Verfahren nach einem der Ansprüche 1 bis 12, das als Mehlsuspension bei 8 % Mehlanteil eine Viskosität zwischen 55 und 65 mPas mit einer Streubreite mehrerer Proben von ≤ ± 5 mPas aufweist.

15. Modifiziertes Quellmehl, insbesondere Roggenquellmehl, herstellbar nach dem Verfahren nach einem der Ansprüche 1 bis 12, das als Mehlsuspension bei 8 % Mehlanteil eine Viskosität zwischen 30 und 40 mPas mit einer Streubreite mehrerer Proben von ≤ ± 5 mPas aufweist.
